# EUROPEAN PATENT APPLICATION

(11) **EP 1 315 351 A1**
(43) Date of publication of application: **28.05.2003**
(21) Application number: 01204521.7
(22) Date of filing: 23.11.2001
(51) Int. Cl.: H04L 29/06, H04M 3/42, H04L 12/18

(54) **Telecommunication method and system for providing chat room participants with anonymous voice communication**

(71) Applicant: Koninklijke KPN N.V., 9726 AE Groningen (NL)
(72) Inventor: van der Werff, Martin Remco, 9741 PE Groningen (NL)
(74) Representative: Prins, Adrianus Willem

(57) **Abstract**

Users (1) may communicate with each other by means of so-called "chat" services (6) via internet (4). Chatting users often prefer to remain anonymus, while using "avatars", nicknames etc. There may be a need to change, at a certain moment, from data-oriented to e.g. voice-oriented chatting, without losing the users' anonymity. After having agreed -via the data-chat service (6)- on an ID code, the users may initiate a new, voice based chat domain via a voice network viz. by entering the agreed ID code into a voice-chat service (7). That service matches the received ID codes and establishes a new, voice based chat session between users entering matching ID codes.

## Description

### Field of the Invention

The invention generally relates to telecommunications in which two or more users communicate with each other e.g. by means of so-called "chat" services etc.

### Background and summary of the Invention

Chatting e.g. via internet has become a popular pastime. Via data-oriented terminals like PC's, users are able to communicate with another. Chatting between two users is possible or between a larger group. In many cases it is preferred to chat anonymously, e.g. by means of "avatars", nicknames etc.

There may be a need or desire to change, at a certain moment, from data-oriented to voice-oriented chatting: switching-over from typing/reading via data-oriented communication means, to talking/listening via voice-oriented communication means, while, preferrably, the users don't lose their anonymity.

To that end the relevant users may agree, during the data chat session, on an ID code (or setup code) to be used for easy setting-up a connection betweeen the interested users via the voice communication means. After having agreed on a code, the users may initiate a new, voice based chat domain via the voice communication means by entering, each user apart, the agreed ID code into those communication means. The communication means match the subsequently received ID codes and establish a communication session between the users with matching ID codes. In this way an anonymous voice chat session can be set-up as a continuation of an e.g. anonymous data chat session.

### Brief Description of the Drawing

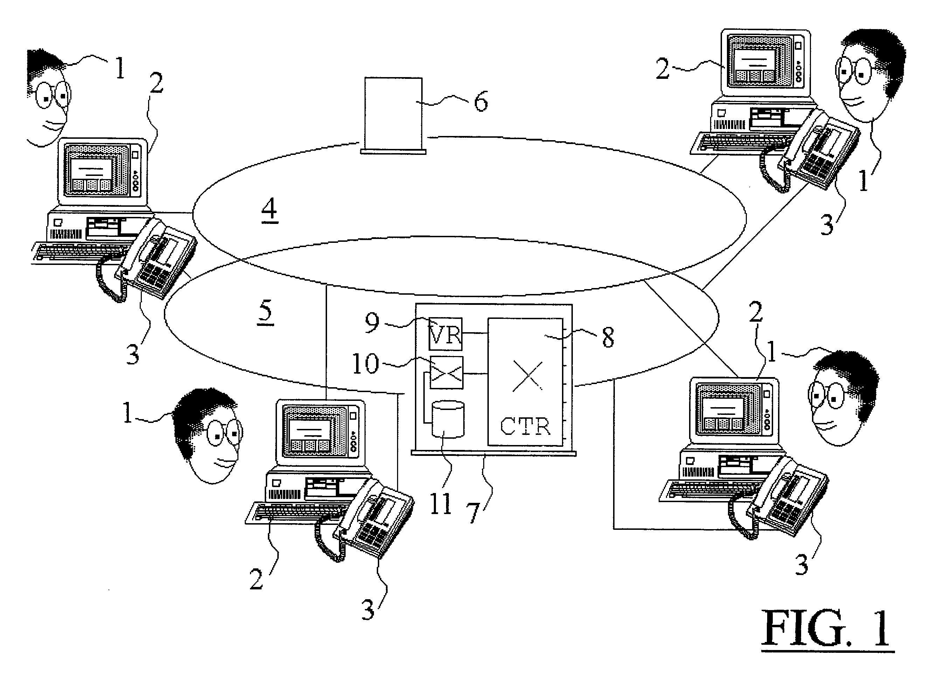

Figure 1 shows schematicly a preferred embodiment in which the inventive method may be executed.

### Detailed Description of the Drawing

Each of a number of users 1 have a PC 2 and telephone apparatus 3, connected to the internet 4 and a telephone network 5 respectively. Via their PC's 2 the users 1 may chat with another, using the services of a chat server 6. At a certain moment the chat participants may feel a need to further conversate via a more direct channel, e.g. the telephone network 5. The users 1 then -via their chat communication- agree on an ID code, to be used for their intended telephone conversation. Most likely the chat-via-internet will be broken down and the users subsequently make, via their telephone devices 3 a call to a voice chat server 7, which comprises a a control module 8 and a voice response (VR) module 9, for enabling the reception of ID codes from the users 1, to be used as voice chat setup codes. Guided by the e.g. VR module, each calling user enters the ID code agreed on during the previous internet chat session. Under control of the control module 8 the voice chat server 7 matches, by means of a matching module 10 the received ID codes and establishes a chat session between the users which have sent matching ID codes. To enable the matching process, each ID code entered by a caller (user 1), is compared, by the matching module 10, with the ID codes already stored within a database 11. When an ID code appears to be new, it will be stored in the database. When it appears, from the matching process, that the received ID code is already present in the database, the control module 8 makes a connection between the users which entered the same ID code. It is possible that, after a new ID code is received, not yet known from the database 11, the calling user 1 is put into a "hold" status, waiting -without breaking the telephone connection with the (first) user- to the next calling user(s) who input an equal ID code. Another option is that the connection to the first caller is broken until next user calls server 7 and entering the same ID code, after which the server 7, by means of the control module 8 sets up a connection to both users. If afterwards more users enter the same ID code, they are, by module 8, switched to the existing conncetion between the first two users.

## Claims

1. Method for telecommunication, comprising that
a. two or more users communicate an ID code to each other;
b. the users enter the ID code into communication means;
c. the communication means match the received ID codes and establish a communication session between the users entering matching ID codes.

2. Method for telecommunication, according to claim 1, wherein
the users communicate said ID code to each other via first communication means and the users enter the ID code into second communication means, whereafter the second communication means match the received ID codes and establish a communication session between the users having entered matching ID codes.

3. Method according to claim 2, wherein the first communication means are data related.

4. Method according to claim 2, wherein the second communication means is voice related.

5. Telecommunication system, comprising means (4,6) for two or more users (1) to communicate an ID code to each other, and communication means (5,7) into which the users may enter said ID code, said communication means comprising means (10) for matching the received ID codes and means (8) for establishing a communication session between the users having matching ID codes.

6. Telecommunication system, according to claim 5, wherein
said two or more users (1) communicate the ID code to each other via first communiation means (4,6), and the users may enter said ID code into second communication means (5,7) comprising means (8,10) for matching the received ID codes and establishing a communication session between the users having matching ID codes.

7. Telecommunication system according to claim 6, wherein the first communication means are data related.

8. Telecommunication system according to claim 6, wherein the first communication means are voice related.
